(19) Europäisches Patentamt
European Patent Office
Office européen des brevets

(11) **EP 4 542 236 A1**

(12) **EUROPEAN PATENT APPLICATION**

(43) Date of publication:
23.04.2025 Bulletin 2025/17

(21) Application number: 24206820.3

(22) Date of filing: 16.10.2024

(51) International Patent Classification (IPC):
**G01P 3/48** (2006.01)    **G01M 13/02** (2019.01)
**G01M 13/028** (2019.01)

(52) Cooperative Patent Classification (CPC):
**G01P 3/48; G01M 13/021; G01M 13/028;**
G01P 3/4802

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 17.10.2023 KR 20230138195

(71) Applicants:
• HD Hyundai Infracore Co., Ltd.
Incheon 22502 (KR)
• Seoul National University R&DB Foundation
Seoul 08826 (KR)

(72) Inventors:
• KIM, Keon
Seongnam-si, Gyeonggi-do 13553 (KR)
• YOUN, Byeng Dong
Seoul 08826 (KR)
• NA, Kyumin
Seoul 08826 (KR)
• LEE, Jinwook
Seoul 08826 (KR)
• YOO, Jinoh
Seoul 08826 (KR)

(74) Representative: Isarpatent
Patent- und Rechtsanwälte
Barth Hassa Peckmann & Partner mbB
Friedrichstraße 31
80801 München (DE)

(54) **APPARATUS AND METHOD FOR ESTIMATING ROTATIONAL SPEED OF GEAR BOX BASED ON VIBRATION SIGNAL**

(57) According to one embodiment of the present disclosure, a speed estimation apparatus may include a converter configured to convert a vibration signal acquired from a gear box into time-frequency representation (TFR), and a generator configured to select a first vertex at a first unit time, based on an energy value of each vertex in the TFR, and to generate information on an operating speed of a machine including the gear box by connecting the first vertex to a second vertex located at a second unit time.

FIG. 1

**Description**

**TECHNICAL FIELD**

The present disclosure relates to an apparatus and a method for estimating a rotational speed, and more particularly, relates to an apparatus and a method for estimating a rotational speed of a gear box, based on a vibration signal in a non-stationary state which is acquired from the gear box.

BACKGROUND

A vibration signal in a non-stationary state is generally observed when vibration data of a mechanical system under an operating condition of a variable speed is acquired. In general, a mechanical system under the operating condition of the variable speed can identify a vibration tendency by using an encoder. However, in many cases, a signal acquired from the encoder has a sampling rate different from that of the vibration signal, and when the encoder and a vibration sensor are not located at the same position, additional work such as resetting an influence of an operating speed on the vibration signal needs to be carried out in view of a mechanical mechanism.

In order to solve these problems, as a method for extracting encoderless vibration data, a method for demodulating a signal whose frequency is modulated from the vibration signal is performed. Alternatively, work for identifying frequency variability is carried out by using a time-frequency ridge model, and based on the work, a method for identifying a change trend of vibration data due to a change in an operating phase is used. However, in general, a demodulation technique effectively works for a mono-component signal. Therefore, when harmonics are detected in multiple directions as in a mechanical system and there exists overlapping frequencies between different component signals due to noise, performance of the demodulation technique tends to be very poor. Consequently, an additional signal filtering technique is required. In addition, in a case of a ridge extraction technique, physical information needs to be recognized in advance to distinguish a valid signal, and there are various limitations such as overlapping between ridges and noise problems. Therefore, in many cases, it is difficult to practically apply the ridge extraction technique.

Meanwhile, there also exists a method for directly acquiring a velocity profile from a gear box by using an encoder or an inertial measurement unit (IMU). However, when the vibration signal is analyzed through the velocity profile acquired from the encoder or the IMU, there is a problem that errors occur due to time delay between vibration sensors and frequency shifting during signal transmission.

SUMMARY

A technical aspect of the present disclosure is to provide an apparatus and a method which can estimate a rotational speed of a gear box without an encoder by using a vibration signal in a non-stationary state which is acquired from the gear box.

Another technical aspect of the present disclosure is to provide an apparatus and a method for estimating a rotational speed, which can acquire an accurate and robust speed profile for the gear box.

The aspects to be achieved by the present disclosure are not limited to those described above, and other aspects to be achieved which are not described will be clearly understood by a person having ordinary skill in the art to which the present disclosure pertains from the description below.

According to one embodiment of the present disclosure, a speed estimation apparatus includes a converter configured to convert a vibration signal acquired from a gear box into time-frequency representation (TFR), and a generator configured to select a first vertex at a first unit time, based on an energy value of each vertex in the TFR, and to generate speed information on the gear box by connecting the first vertex to a second vertex located at a second unit time.

Here, the generator may set a selectable region for the first vertex and the second vertex in the TFR by using a gear mesh frequency (GMF) of the gear box, based on a speed signal measured in the gear box.

In addition, as the first vertex, the generator may select a vertex having the greatest energy value from the vertices located at the first unit time within the selectable region.

In addition, the generator may derive a weighted value for a line segment connecting two vertices in the TFR, based on at least one of an energy value of each vertex located within the selectable region and a preset acceleration tolerance, and may select the second vertex from the vertices located at the second unit time within the selectable region, based on the weighted value.

In addition, as candidate vertices for the second vertex, the generator may select vertices having an energy value greater than a first threshold from the vertices located at the second unit time within the selectable region, based on the weighted value.

In addition, as the candidate vertices for the second vertex, the generator may select candidate vertices located within the acceleration tolerance from the candidate vertices, based on the weighted value.

In addition, as the second vertex, the generator may select a vertex having an energy value in which a difference between the energy value of the first vertex and the energy value of the second vertex is smaller than a second threshold, from the candidate vertices located within the acceleration tolerance, based on the weighted value.

In addition, the generator may generate each speed information on component signals of the vibration signal by repeating a process of connecting vertices in the TFR, and may generate a speed profile by adding each generated speed information.

In addition, the generator may change the energy value of the vertex selected during a process of generating the speed information on a first component signal in the component signals and a vertex adjacent to the selected vertex, and thereafter, may generate speed information on a second component signal, based on the changed energy value.

In addition, the generator may analyze a correlation between the respective speed information, and may generate the speed profile by excluding the speed information on the component signal having a correlation equal to or smaller than a threshold.

According to another embodiment of the present disclosure, a speed estimation method includes converting a vibration signal acquired from a gear box into time-frequency representation (TFR), selecting a first vertex at a first unit time, based on an energy value of a vertex in the TFR, and generating speed information on the gear box by connecting the first vertex to a second vertex located at a second unit time.

According to still another embodiment of the present disclosure, there is provided a computer-readable medium storing a computer program including a command that causes a processor to execute a process for a speed estimation method. The process includes converting a vibration signal acquired from a gear box into time-frequency representation (TFR), selecting a first vertex at a first unit time, based on an energy value of a vertex in the TFR, and generating the speed information on the gear box by connecting the first vertex to a second vertex located at a second unit time.

According to one embodiment of the present disclosure, a rotational speed of a gear box can be estimated without an encoder by using a vibration signal in a non-stationary state which is acquired from the gear box.

According to one embodiment of the present disclosure, accurate and robust speed data can be acquired from the gear box. Therefore, conditions of a machine provided with the gear box can be monitored through the speed data, and a difference between vibration signals which is caused by operating phase difference can be reduced even when signals are changed due to an operating environment. Therefore, false detection can be reduced.

## BRIEF DESCRIPTION OF THE DRAWINGS

FIG. 1 is a diagram illustrating a speed estimation apparatus according to one embodiment of the present disclosure.

FIG. 2 is a diagram illustrating a process of converting a vibration signal into a time-frequency domain according to the embodiment of the present disclosure.

FIG. 3 is a diagram illustrating a process of generating speed information according to the embodiment of the present disclosure.

FIG. 4 is a diagram illustrating a process of setting a region in which a vertex can be selected according to the embodiment of the present disclosure.

FIGS. 5 and 6 are diagrams illustrating a process of connecting vertices according to the embodiment of the present disclosure.

FIG. 7 is a diagram illustrating a process in which a speed estimation apparatus according to the embodiment of the present disclosure repeatedly extracts speed information on each component signal of a vibration signal.

FIG. 8 is a diagram illustrating a process of generating a speed profile according to the embodiment of the present disclosure.

FIG. 9 is a diagram illustrating a speed estimation method according to another embodiment of the present disclosure.

## DETAILED DESCRIPTION

Advantages and features of the present disclosure, and methods for achieving the advantages and the features will become apparent with reference to embodiments described below together with the accompanying drawings. However, the present disclosure is not limited to the embodiments described below, and may be achieved in various different forms. The embodiments are provided only to complete the present disclosure, and to fully inform those skilled in the art of the scope of the disclosure. The present disclosure is defined only by the scope of the appended claims. Accordingly, in some embodiments, well-known processing steps, well-known device structures, and well-known techniques are not specifically described in order to avoid an ambiguity in the interpretation of the present disclosure.

Terms used in the present specification have been selected from among currently widely used general terms in view of functions of the present disclosure. However, the terms may vary depending on an intention of a technician employed in the relevant field, precedents, emergence of new technologies, or the like. In addition, in a certain case, there are terms arbitrarily selected by the applicants. In this case, meanings thereof will be described in detail when the disclosures are described. Therefore, the terms used in the present specification should be interpreted based on the meanings of the terms and overall contents of the present disclosure, instead of names of simple terms.

When it is described throughout the present specification that a part "includes" a certain component, unless otherwise stated, the description means that other components may be further included rather than excluding other components.

In addition, the terms a 'part', a 'module', or the like used in the present specification may mean software or hardware components such as a Field Programmable Gate Array (FPGA) or an Application Specific Integrated Circuit (ASIC), and the 'part', the 'module', or the like performs at least one function or one operation. However, the 'part', the 'module', or the like is not limited to software or hardware. The 'part', the 'module', or the like may be configured to exist in an addressable storage medium, and may be configured to reproduce one or more processors. Accordingly, as an example, the 'part', the 'module', or the like includes components such as software components, object-oriented software components, class components, and task components, and processes, functions, properties, procedures, subroutines, segments of program codes, drivers, firmware, microcode, circuits, data, databases, data structures, tables, arrays, and variables. Functions provided by the components, the 'part', the 'module', or the like of the present disclosure may be combined into a smaller number of the components, the 'part', the 'module', or the like, or may be further separated into additional components, another 'part', another 'module', or the like.

In addition, although the terms first, second, third, or the like may be used in the present specification to describe various components, these components are not limited by the terms. The terms are used to distinguish one component from other components.

Hereinafter, with reference to the accompanying drawings, embodiments of the present disclosure will be described in detail so that those skilled in the art can easily practice the present disclosure. In addition, in order to clearly describe the present disclosure in the drawings, elements that do not relate to the description will be omitted. The same reference numerals throughout the specification indicate the same components.

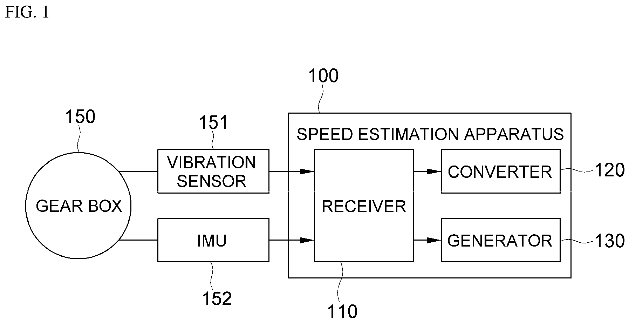

FIG. 1 is a diagram illustrating a speed estimation apparatus according to one embodiment of the present disclosure.

Referring to FIG. 1, a speed estimation apparatus (100) according to one embodiment of the present disclosure includes a receiver (110), a converter (120), and a generator (130).

The receiver (110) may be configured to receive a vibration signal measured by a vibration sensor (151) provided in a gear box (150) and an acceleration signal and/or each speed signal which are measured by an inertial measurement unit (IMU, 152). Here, the vibration signal acquired from the gear box (150) may be a non-stationary signal. The non-stationary signal may mean a signal whose frequency property (or characteristic) is changed with the lapse of time since the gear box (150) is operated at a variable speed. The gear box (150) is a device including a plurality of gears for power transmission, and may be used interchangeably with terms such as a gear case and a gear set.

As an example, when the speed estimation apparatus (100) according to the embodiment of the present disclosure is used to generate a rotational speed profile for a planetary gear box provided in a turning unit of a construction machine such as an excavator, the receiver (110) may be configured to receive the vibration signal, the speed signal, or the like measured in the planetary gear box, based on a wired or wireless communication method from the vibration sensor (151), the IMU (152), or the like. However, the present disclosure is not limited thereto, and may be used to acquire a speed profile of all machines provided with the gear box.

The converter (120) may be configured to convert the vibration signal in a non-stationary state which is acquired from the gear box (150) through the receiver (110) into time-frequency representation (TFR). For example, the converter (120) may remove noise from the vibration signal, and may perform short time Fourier transform (STFT) to generate the TFR expressing the vibration signal in a time-frequency domain. Here, the TFR may be used interchangeably with terms such as images and spectrograms.

The generator (130) may be configured to generate speed information (or speed estimation information) on the gear box (150) by performing a process of selecting a first vertex at a first unit time, based on an energy value of a vertex in the TFR generated by the converter (120), and connecting the first vertex to a second vertex located at a second unit time. For this purpose, the generator (130) may substitute each index of the TFR generated by the converter (120) as the vertex, or may regard each index as the vertex. Then, the speed information may be generated by calculating an optimal path through a process of selecting or determining a line segment connecting the respective vertices.

For example, the generator (130) may set a selectable region for the first vertex and the second vertex in the TFR by using a gear mesh frequency (GMF) of the gear box (150), based on a signal acquired from the IMU (152) through the receiver (110). Therefore, when the generator (130) calculates a path for connecting the respective vertices, a range of selectable vertices may be limited to vertices located between an upper limit and a lower limit which are set by the GMF of the gear box (150), based on the speed signal measured in the gear box (150). As the first vertex, the generator (130) may select the vertex having a greatest energy value from the vertices located at the first unit time within the selectable region.

Here, the first vertex may mean the vertex located on an index (0, p) in the TFR. That is, as the first vertex, the generator (130) may select the vertex having the greatest energy value within the selectable region when selecting the first vertex in the TFR.

Meanwhile, the generator (130) may derive a weighted value (hereinafter, referred to as a node weighted value) for a line segment connecting two vertices in the TFR, based on at least one of the energy value of each vertex located in the selectable region and a preset acceleration tolerance, and may select the second vertex from the vertices located at the second unit time within the selectable region, based on the weighted value. Here, the second vertex may mean the vertex located on an index (1, p) in the TFR. That is, the generator (130) may limit a range or a position of the vertex selectable as the second vertex by using the node weighted value derived based on the energy value and/or the acceleration tolerance of the vertices located within the selectable region when selecting the second vertex to be connected to the first vertex in the TFR.

For example, based on the node weighted value, the generator (130) may select the vertices having an energy value greater than a first threshold and/or the vertices located within the acceleration tolerance the vertices located in the second unit time within the selectable region, from the vertices located at the second unit time within the selectable region, as candidate vertices for the second vertex, and may select the vertex in which a difference between the energy value of the first vertex and the energy value of the second vertex is smaller than a second threshold, from the candidate vertices, as the second vertex. Here, the first threshold may be set based on an average energy value of the vertices located at the second unit time, and the second threshold may be set based on an average value of a difference between the energy value of the first vertex and the energy value of each vertex located at the second unit time. As an example, the first threshold may be set to be equal to or greater than the average energy value of the vertices located at the second unit time, and the second threshold may be set to be equal to or smaller than the average value of the difference between the energy value of the first vertex and the energy value of each vertex located at the second unit time.

The generator (130) may generate the speed information by repeating a process of connecting the two vertices in this way until the first vertex to a last vertex in the TFR are connected. In addition, the generator (130) may repeatedly perform a process of generating the speed information on each component signal of the vibration signal, and may generate a speed profile, based on each speed information generated through the repeated process. In this case, the generator (130) may change the energy value of the vertex selected in the process of generating the speed information on the first component signal and the vertex adjacent to the selected vertex, and thereafter, may generate the speed information on a second component signal, based on the changed energy value. Here, the second component signal may be be a signal having a higher order than the first component signal.

For example, the energy value of the vertex selected in the process of generating the speed information on the first component signal and the vertex adjacent to the selected vertex may be set to a smaller value than the energy value of the vertex corresponding to the second component signal when the speed information on the second component signal is generated. Alternatively the energy value may be substituted with or set to zero.

When a plurality of the speed information are generated for the component signals of the vibration signal, the generator (130) may analyze a correlation between the respective speed information, and may generate the speed profile by excluding the speed information on the component signals having the correlation equal to or smaller than a threshold.

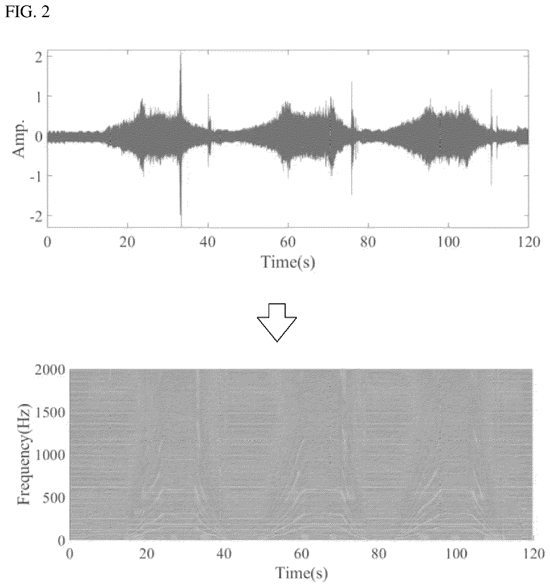

FIG. 2 is a diagram illustrating a process of converting the vibration signal into a time-frequency domain according to the embodiment of the present disclosure.

The speed estimation apparatus according to the embodiment of the present disclosure may convert a domain of the vibration signal received from the gear box into the time-frequency domain by using continuous wavelet transform CWT), STFT, or the like.

As an example, the speed estimation apparatus may express the vibration signal in the time-frequency domain by performing the STFT on the vibration signal as expressed in Mathematical Expression 1 below.

[Mathematical Expression 1]

$$X_S(\tau, \omega) = \int s(t)w(t - \tau)e^{-j\omega t}dt$$

Here, S(t) represents the vibration signal, and $\tau$ and $\omega$ respectively represent a time domain index and a frequency domain index, and w is a window function.

The TFR generated by STFT may be called a spectrogram, and energy of the vibration signal in the TFR may be expressed by multiplying a vibration signal Xs calculated in the time-frequency domain and a complex conjugate signal thereof, as expressed in Mathematical Expression 2 below.

[Mathematical Expression 2]

$$C_s(\tau, \omega) = X_s(\tau, \omega)X_s^*(\tau, \omega)$$

The speed estimation apparatus may generate the speed information on the vibration signal by considering each index (i, j) as the vertex in the TFR obtained as illustrated in FIG. 2 and connecting the vertices selected at respective unit times.

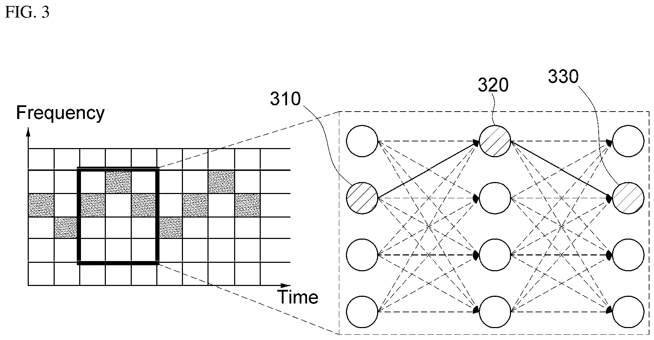

FIG. 3 is a diagram illustrating a process of generating the speed information according to the embodiment of the present disclosure.

Referring to FIG. 3, the speed estimation apparatus according to the embodiment of the present disclosure may determine one line segment (or a main line) connecting two different vertices in the TFR to extract the speed information on the vibration signal in the TFR. For example, the speed estimation apparatus may generate the speed information in such a manner that the shortest path connecting the respective vertices (310, 320, and 330) is calculated by repeating a process of deriving the node weighted value for the line segments connecting the first vertex (310) located on an index (i, j) in the TFR as illustrated in FIG. 3 and the vertices located on the index (i+1, p), based on a path finding algorithm such as a Dijkstra's algorithm, and deriving the node weighted value for the line segments connecting the second vertex (320) selected based on the node weighted value and the vertices located on an index (i+2, p).

In a case where the first vertex (310) is the first vertex in the TFR, that is, in a case where the first vertex (310) is located at the first unit time corresponding to the index (0, p) in the TFR, the speed estimation apparatus may select the vertex having the greatest energy value at the first unit time, as the first vertex. The indexes or the positions of the second vertex (320) and a third vertex (330) may be determined or selected, based on the node weighted value. Here, the node weighted value is used to limit a range or a position in which the vertex (destination point) to be connected to a reference vertex (starting point) can be selected. For this purpose, a plurality of the node weighted values may be individually or comprehensively used in the present disclosure.

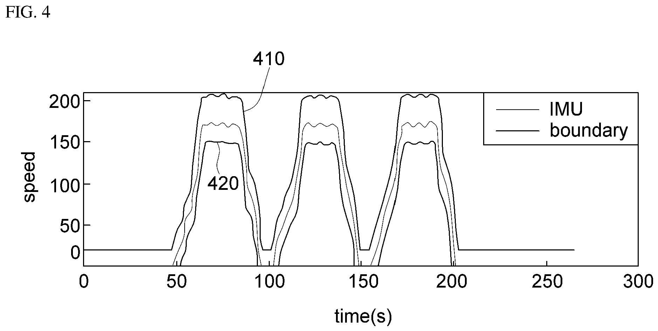

Hereinafter, referring to FIGS. 4 to 6, a process in which the speed estimation apparatus according to the embodiment of the present disclosure generates the speed information by calculating a connection path between the vertices will be described in more detail.

FIG. 4 is a diagram illustrating a process of setting a region in which the vertex can be selected according to the embodiment of the present disclosure.

Referring to FIG. 4, the speed estimation apparatus according to the embodiment of the present disclosure may limit a range of the vertices that can be selected when calculating a path, based on the speed signal (for example, an acceleration signal, each speed signal, or the like) measured in the gear box, and the GMF of the gear box. As an example, the speed signal may be measured by a speed measurement device such as a speed sensor, an acceleration sensor, an IMU, and the like.

For example, the speed estimation apparatus may set a boundary, based on a signal as expressed in Mathematical Expression 3 below.

[Mathematical Expression 3]

$$s_I(t, \alpha, \beta) = (1 + \alpha)s_I(t - \beta)$$
$$b_u(t) = \max_A \{f_{GMF}s_I(t, \alpha, \beta)\}, A = \{(\alpha, \beta)| |\alpha| \leq \alpha_p, |\beta| \leq \beta_p\}$$
$$b_l(t) = \max\{\min_A \{f_{GMF}s_I(t, \alpha, \beta)\}, 0\}, A = \{(\alpha, \beta)| |\alpha| \leq \alpha_p, |\beta| \leq \beta_p\}$$

Here, $S_I$ represents the signal obtained from the IMU, $\alpha$ and $\beta$ represent a tolerance in units of % in a frequency unit for Si and a tolerance in units of time (for example, seconds) in the unit time. $f_{GMF}$ is a physical constant multiplied when Si and GMF are calculated.

Si may be calculated by the IMU, and may be input to the speed estimation apparatus, or may be derived, based on each speed signal and/or the acceleration signal received from the IMU by the speed estimation apparatus. Here, $b_u(t)$ represents an upper limit (410) of the vertex at which path calculation is performed, and $b_1(t)$ represents a lower limit (420) of the vertex at which the path calculation is performed.

The speed estimation apparatus may generate the speed information by calculating the path by using the vertices located within a range limited by $b_u(t)$ and $b_1(t)$. Therefore, a region between $b_u(t)$ and $b_1(t)$ may be defined as the selectable region for the vertex.

It is difficult to accurately estimate the speed since the signal acquired from the IMU has problems such as time delay and frequency shift during signal transmission. Therefore, the speed estimation apparatus may impose the following constraints on connecting the vertices by inverting results which can be acquired from the IMU.

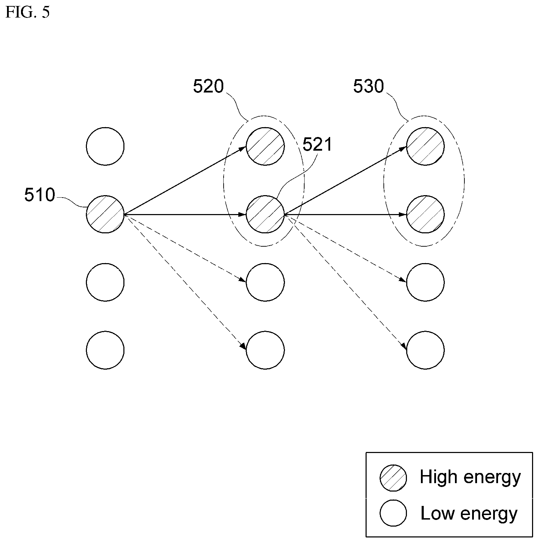

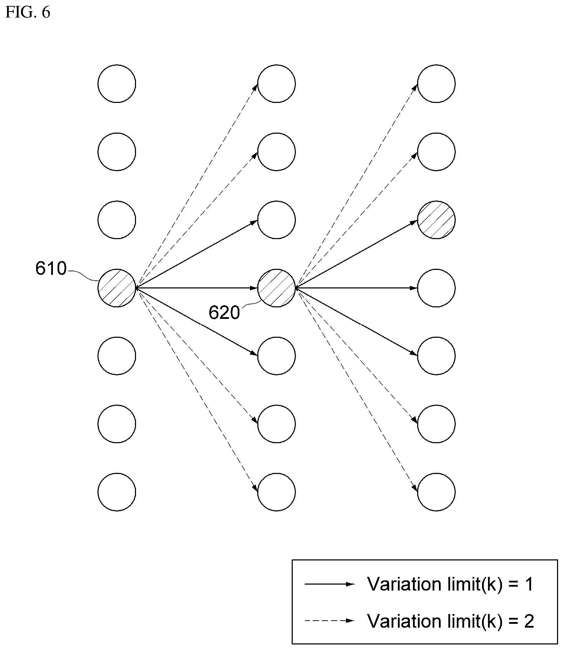

FIGS. 5 and 6 are diagrams illustrating a process of connecting the vertices according to the embodiment of the present disclosure.

First, referring to Fig. 5, the speed estimation apparatus may calculate a first node weighted value based on the energy value of each vertex within a range (selectable region for the vertex) set based on the speed signal measured in the gear box.

For example, in order to select or determine a destination point from the vertices located on the index (i+1, p) with reference to the vertex located on the index (i, j) in the TFR, the speed estimation apparatus may calculate the first node weighted value as expressed in Mathematical Expression 4 below.

[Mathematical Expression 4]

$$nw_1(i, j, i+1, p) = 1 - \frac{C(i+1, p)}{\max_p C(i+1, p)}$$

Here, C represents the energy value at the corresponding vertex.

Referring to Mathematical Expression 4, a line segment connecting the starting point (i, j) and the destination point (i+1, p) has the weighted value for the vertex having relatively high energy. The energy value of the vertex existing at a position corresponding to the vibration signal in the TFR is greater than the energy values of the surrounding vertices. Therefore, the speed estimation apparatus may derive the vertices (520) having great energy values from the vertices located on the index (i+1, p) based on Mathematical Expression 4 as the candidate vertices to be connected to the first vertex (510) located on the index (i, j). As an example, when the second vertex (521) located on the index (i+1, j) is selected from the candidate vertices (520), the speed estimation apparatus may determine the vertices (530) having a great energy value from the vertices located on the index (i+2, p), as the candidate vertices to be connected to the second vertex (521), based on the first node weighted value.

Meanwhile, the speed estimation apparatus may calculate a second node weighted value, based on the acceleration tolerance within a range set based on the speed signal measured in the gear box. For example, in order to select the destination point (620) from the vertices located on the index (i+1, p) with reference to the starting point (610) located on the index (i+1, p), the speed estimation apparatus may calculate the second node weighted value, as expressed in Mathematical Expression 5 below.

[Mathematical Expression 5]

$$nw_2(i, j, i+1, p) = \begin{cases} \infty & where \ |p-j| > K \\ 0 & o.w. \end{cases}$$

Referring to Mathematical Expression 5, the weighted value for the line segment connecting the starting point (i, j) and the destination point (i+1, p), that is, a range of the vertices that can be selected as the destination point, is determined by a K value. The K value may be derived, based on Mathematical Expression 6 below.

[Mathematical Expression 6]

$$K = p_a \times \frac{frequency \ resolution}{time \ resolution}$$

Here, $p_a$ is a constant and a parameter that determines the acceleration tolerance, and frequency resolution and time resolution may be respectively determined by a window length and FFT parameters.

In the frequency of the vibration signal, acceleration is changed with the lapse of time within a certain range. Therefore, the speed estimation apparatus may set a range of the acceleration tolerance that is allowable for the unit time subsequent to a current unit time in the TFR, based on Mathematical Expressions 5 and 6, and may derive the vertices located within the acceleration tolerance can be derived from the vertices located on the index (i+1, p), as the candidate vertices for the destination point.

As an example, referring to FIG. 6, when the K value is 1, the candidate vertex that can be connected to the starting point (610) located on the index (i, j) in the TFR may be limited within a range from the index (i+1, j-1) to the index (i+1, j+1). When the K value is 2, the candidate vertex that can be connected to the starting point (610) located on the index (i, j) may be limited within a range from the index (i+1, j-3) to the index (i+1, j+3). That is, the destination point (620) may be selected within a range limited by the K value.

In addition, the speed estimation apparatus may calculate a third node weighted value, based on an allowable energy change amount within a range set based on the speed signal measured in the gear box.

In the TFR, when the component signals are the same, the energy is less changed with the lapse of time. Therefore, the speed estimation apparatus may divide an energy difference between the two vertices (starting point and destination point) by a noise level as expressed in Mathematical Expression 7 below, and may normalize the result to have a value from 0 to 1 by using an inverse normal function.

[Mathematical Expression 7]

$$nw_3(i, j, i+1, p) = \Phi^{-1}\left(\frac{C(i+1, p) - C(i, j)}{\sigma}\right)$$

The speed estimation apparatus may select the vertex in which the difference between the energy value of the first vertex and the energy value of the second vertex is smaller than the second threshold, as the second vertex, based on the third node weighted value as in Mathematical Expression 7.

Meanwhile, the speed estimation apparatus may perform the path calculation, based on at least one of the first node weighted value to the third node weighted value which are described above, or may perform the path calculation, based on a final weighted value obtained by adding the first node weighted value to the third node weighted value, as expressed in Mathematical Expression 8 below.

[Mathematical Expression 8]

$$nw_t(i, j, i+1, p) = \gamma_i nw_i(i, j, i+1, p)/(\gamma_1 + \gamma_2 + \gamma_3)$$

When the path calculation is performed based on the final weighted value of Mathematical Expression 8, a range for selecting the path is limited, compared to when the path calculation is performed based on any one weighted value of the first node weighted value to the third node weighted value. Therefore, the speed information may be more quickly and accurately extracted from the vibration signal.

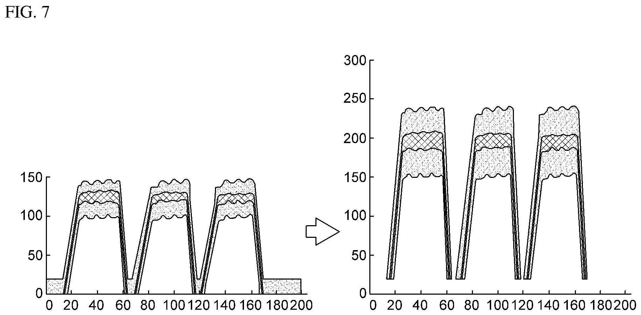

FIG. 7 is a diagram illustrating a process in which the speed estimation apparatus according to the embodiment of the present disclosure repeatedly extracts the speed information on each component signal of the vibration signal.

Referring to FIG. 7, the speed estimation apparatus may extract the speed information on each component signal by repeatedly executing the above-described path finding process on each component signal of the vibration signal. In this case, the speed estimation apparatus may change the energy value of the vertex selected in the process of generating the speed information on the first component signal and the vertex adjacent to the selected vertex, and thereafter, may generate the speed information on the second component signal, based on the changed energy value.

The vibration signal may include the n-number of component signals, and the energy of the vertex corresponding to the i-th component signal in the TFR is higher than the energy of the vertex corresponding to the i+1-th component signal. Therefore, the speed estimation apparatus may set the energy value of the vertex selected in the process of generating the speed information on the i-th component signal and the vertex adjacent to the selected vertex to have a smaller value than the energy value of the vertex corresponding to the i+1-th component signal, or may substitute the energy value with zero, or may set the energy value to zero. Thereafter, the speed estimation apparatus may generate the speed information on the i+1-th component signal, thereby preventing a result similar to the speed information on the i-th component signal from being obtained when the speed information on the i+1-th component signal is generated.

As an example, the speed estimation apparatus may remove the selected vertex and the surrounding vertices when the speed information on the component signal of the vibration signal is generated as illustrated in Fig. 7, based on Mathematical Expression 9 below.

[Mathematical Expression 9]

$$C^{(ic+1)}(i,j) = \begin{cases} C^{(ic)}(i,j) & |j - e^{(ic)}(i)| < p_j \\ 0 & o.w. \end{cases}$$

Here, $e^{(ic)}(i)$ represents the speed information on the i-th component signal, and pj is a parameter for removing all of the vertices corresponding to the i-th component signal and the surrounding vertices in the TFR. As an example, a Pj value may be set to 2. $C^{(ic)}(i, j)$ represents the energy on the TFR index (i, j) used during the ic-th repetition process, and ic = 1 represents the speed information of the vibration signal (basic signal).

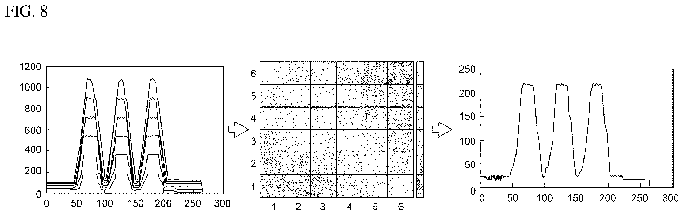

FIG. 8 is a diagram illustrating a process of generating the speed profile according to the embodiment of the present disclosure.

As illustrated in FIG. 8, when the plurality of speed information on the component signals of the vibration signal are generated, the speed estimation apparatus may generate the speed profile by adding the respective speed information. In this case, the speed estimation apparatus may analyze a correlation between the respective speed information, based on Mathematical Expression 7 below, and may exclude the speed information on the component signal having the correlation equal to or smaller than a threshold when the speed profile is generated.

[Mathematical Expression 10]

$$Corr([e^{(1)}(i), e^{(2)}(i), e^{(3)}(i), ..., e^{(n)}(i)]) = CX$$
$$\eta = \{ic | \max(CX_{ic,*}) > p_{mic}\}$$
$$esp(i) = \frac{1}{N_{ic}} \sum_{ic \subseteq \eta} \frac{e^{(ic)}(i)}{ic}$$

Here, $p_{mic}$ is a parameter that determines the component signal having the lowest correlation, based on the correlation between the component signals, and $N_{ic}$ represents the total number of elements of a matrix $\eta$.

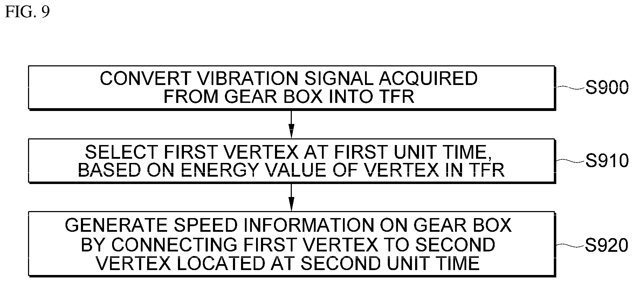

FIG. 9 is a diagram illustrating a speed estimation method according to another embodiment of the present disclosure.

Referring to FIG. 9, the speed estimation apparatus according to the embodiment of the present disclosure may convert the vibration signal acquired from the gear box into the TFR (S900). For this purpose, the speed estimation apparatus may receive the vibration signal from the vibration sensor provided in the gear box. Here, the vibration signal may be the vibration signal in a non-stationary state. The vibration signal in the non-stationary state may be measured when a machine including the gear box is operated at a variable speed.

The speed estimation apparatus may generate the speed information on the gear box in such a manner that the index (i, j) is substituted with or regarded as the vertex in the TFR, the first vertex is selected at the first unit time, based on the energy value of the vertex (S910), and a process of connecting the first vertex to the second vertex located at the second unit time is repeatedly executed until the n-th vertex located at the n-th unit time is connected (S920). In this case, the speed estimation apparatus may set the selectable region for the first vertex and the second vertex in the TFR, based on the speed signal measured in the gear box. For example, the speed estimation apparatus may limit a range of the vertices (selectable region for the vertex) that can be selected when the path calculation is performed to extract the speed information in the TFR by using the signal acquired from the IMU and the GMF of the gear box. The speed estimation apparatus may select the vertex having the greatest energy value from the vertices located at the first unit time within the selectable region, as the first vertex. Here, the first vertex may mean the vertex located on the index (0, p) in the TFR. In addition, the speed estimation apparatus may derive the weighted value for the line segment connecting the starting point and the destination point in the TFR, based on at least one of the energy value of each vertex located within the selectable region and the preset acceleration tolerance, and may select the second vertex from the vertices located at the second unit time within the selectable region, based on the weighted value.

For example, based on at least one weighted value described above with reference to FIGS. 5 and 6, the speed estimation apparatus may select the vertices having the energy value greater than the first threshold and/or the vertices located within the acceleration tolerance, from the vertices located at the second unit time within the selectable region, as the candidate vertices for the second vertex, and may select the vertex in which the difference between the energy value of the first vertex and the energy value of the second vertex is smaller than the second threshold, from the candidate vertices, as the second vertex.

The speed estimation apparatus may generate the speed information on the vibration signal by repeatedly executing the process of connecting the starting point and the destination point in the TFR until the first vertex to the last vertex are connected in the TFR. In addition, the speed estimation apparatus may repeatedly execute the process of generating the speed information on at least one of the component signals of the vibration signal, and may generate the speed profile for the gear box, based on the speed information generated through the repeated process. In this case, the speed estimation apparatus may change the energy value of the vertex selected during the process of generating the speed information on the first component signal and the vertex adjacent to the selected vertex, and thereafter, may generate the speed information on the second component signal, based on the changed energy value.

For example, the speed estimation apparatus may remove the vertex in the TFR in such a manner that the energy value of the vertex selected during the process of generating the speed information on the first component signal and the vertex adjacent to the selected vertex is set to have a smaller value than the energy value of the vertex corresponding to the second component signal, or the energy value of the vertex is substituted with or set to zero. The speed estimation apparatus may analyze a correlation between the respective speed information on the respective component signals of the vibration signal, and may generate the speed profile by excluding the speed information on the component signal having the correlation equal to or smaller than the threshold.

Meanwhile, respective processes included in the speed estimation method performed by the speed estimation apparatus according to the above-described embodiment may be achieved as a computer program including commands for causing a processor to execute the processes.

In addition, the respective processes included in the speed estimation method performed by the speed estimation apparatus according to the above-described embodiment can be achieved in a computer-readable recording medium on which the computer program including the commands for causing the processor to execute the processes is recorded.

A combination of the respective processes in a flowchart attached to the present disclosure may be executed by computer program instructions. The computer program instructions may be installed in a processor of a general-purpose computer, a special-purpose computer, or other programmable data processing apparatuses. Therefore, the instructions executed by the processor of the computer or other programmable data processing apparatuses generate means for fulfilling functions described in the respective processes in the flowchart. The computer program instructions may be stored in a computer-usable or computer-readable recording medium that can direct the computer or other programmable data processing apparatuses to achieve the functions in a specific manner. Therefore, the instructions stored in the computer-usable or computer-readable recording medium may produce a manufacturing item including instruction means for fulfilling the functions described in the respective processes in the flowchart. The computer program instructions may be installed in the computer or other programmable data processing apparatuses. Therefore, a series of operational processes are executed in the computer or other programmable data processing apparatuses to generate a computer-executable process. In this manner, the instructions that cause the computer or other programmable data processing apparatuses to execute the processes may provide the processes for fulfilling the functions described in the respective processes in the flowchart.

In addition, the respective processes may represent a module, a segment, or a portion of a code that includes one or more executable instructions for fulfilling a particular logical function(s). In addition, in some alternative embodiments, the functions described in the processes may occur out of order. For example, two processes illustrated in succession may be executed at substantially the same time, or the processes may sometimes be executed in a reverse order, depending on the corresponding function.

The above description merely describes the technical idea of the present disclosure as an example, and those skilled in the art to which the present disclosure pertains may add various corrections and modifications within the scope not departing from essential quality of the present disclosure. Therefore, the embodiments described in the present disclosure are not intended to limit the technical idea of the present disclosure, and are intended to describe the technical idea of the present disclosure. The scope of the technical idea of the present disclosure is not limited by the embodiments. The protection scope of the present disclosure should be interpreted by the appended claims, and all technical ideas within the scope equivalent thereto should be interpreted as being included in the scope of rights of the present disclosure.

[Detailed Description of Main Elements]

100: speed estimation apparatus
110: reciever
120: converter
130: generator
150: gear box

151: vibration sensor
152: IMU

**Claims**

1.  A speed estimation apparatus (100) comprising:

    a converter (120) configured to convert a vibration signal acquired from a gear box (150) into time-frequency representation (TFR); and
    a generator (130) configured to select a first vertex at a first time unit, based on an energy value of a vertex in the TFR, and to generate speed information on the gear box (150) by connecting the first vertex to a second vertex located at a second unit time.

2.  The speed estimation apparatus of claim 1, wherein the generator (130) sets a selectable region for the first vertex and the second vertex in the TFR by using a gear mesh frequency (GMF) of the gear box (150), based on a speed signal measured in the gear box (150).

3.  The speed estimation apparatus of claim 2, wherein the generator (130) selects a vertex having the greatest energy value from the vertices located at the first unit time within the selectable region, as the first vertex.

4.  The speed estimation apparatus of claim 2, wherein the generator (130) derives a weighted value for a line segment connecting two vertices in the TFR, based on at least one of an energy value of each vertex located within the selectable region and a preset acceleration tolerance, and selects the second vertex from the vertices located at the second unit time within the selectable region, based on the weighted value.

5.  The speed estimation apparatus of claim 4, wherein the generator (130) selects vertices having an energy value greater than a first threshold from the vertices located at the second unit time within the selectable region, as candidate vertices for the second vertex, based on the weighted value.

6.  The speed estimation apparatus of claim 5, wherein the generator (130) selects candidate vertices located within the acceleration tolerance from the candidate vertices as candidate vertices for the second vertex, based on the weighted value.

7.  The speed estimation apparatus of claim 6, wherein the generator (130) selects a vertex having an energy value in which a difference between the energy value of the first vertex and the energy value of the second vertex is smaller than a second threshold, from the candidate vertices located within the acceleration tolerance, as the second vertex, based on the weighted value.

8.  The speed estimation apparatus of claim 1, wherein the generator (130) generates each speed information on component signals of the vibration signal by repeating a process of connecting vertices in the TFR, and generates a speed profile by adding each generated speed information.

9.  The speed estimation apparatus of claim 8, wherein the generator (130) changes the energy value of the vertex selected during a process of generating the speed information on a first component signal in the component signals and a vertex adjacent to the selected vertex, and thereafter, generates speed information on a second component signal, based on the changed energy value.

10. The speed estimation apparatus of claim 8, wherein the generator (130) analyzes a correlation between the respective speed information, and generates the speed profile by excluding the speed information on the component signal having a correlation equal to or smaller than a threshold.

11. A speed estimation method comprising:

    converting a vibration signal acquired from a gear box into time-frequency representation (TFR);
    selecting a first vertex at a first unit time, based on an energy value of a vertex in the TFR; and
    generating speed information on the gear box by connecting the first vertex to a second vertex located at a second unit time.

**12.** The speed estimation method of claim 11, further comprising:
setting a selectable region for the first vertex and the second vertex in the TFR by using a gear mesh frequency (GMF) of the gear box, based on a speed signal measured in the gear box, after the converting.

**13.** The speed estimation method of claim 12, wherein the selecting includes selecting a vertex having a greatest energy value from vertices located at the first unit time within the selectable region, as the first vertex, deriving a weighted value for a line segment connecting two vertices in the TFR, based on at least one of an energy value of each vertex located within the selectable region and a preset acceleration tolerance, and selecting the second vertex from the vertices located at the second unit time within the selectable region, based on the weighted value.

**14.** The speed estimation method of claim 11, wherein the generating includes generating each speed information on component signals of the vibration signal by repeating a process of connecting vertices in the TFR, and generating a speed profile by adding each generated speed information.

**15.** A computer-readable medium storing a computer program including a command that causes a processor to execute a process for a speed estimation method, the process comprising:

converting a vibration signal acquired from a gear box into time-frequency representation (TFR);
selecting a first vertex at a first unit time, based on an energy value of a vertex in the TFR; and
generating the speed information on the gear box by connecting the first vertex to a second vertex located at a second unit time.

FIG. 1

100

150

151

SPEED ESTIMATION APPARATUS

GEAR BOX

VIBRATION
SENSOR

RECEIVER

CONVERTER — 120

IMU

GENERATOR — 130

152

110

FIG. 2

FIG. 3

FIG. 4

FIG. 5

FIG. 6

610

620

Variation limit(k) = 1
Variation limit(k) = 2

FIG. 7

FIG. 8

FIG. 9

| | |
|---|---|
| CONVERT VIBRATION SIGNAL ACQUIRED FROM GEAR BOX INTO TFR | ~S900 |
| SELECT FIRST VERTEX AT FIRST UNIT TIME, BASED ON ENERGY VALUE OF VERTEX IN TFR | ~S910 |
| GENERATE SPEED INFORMATION ON GEAR BOX BY CONNECTING FIRST VERTEX TO SECOND VERTEX LOCATED AT SECOND UNIT TIME | ~S920 |

Europäisches
Patentamt
European
Patent Office
Office européen
des brevets

# EUROPEAN SEARCH REPORT

**Application Number**

EP 24 20 6820

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 791 155 A (UNIV DALIAN TECH) 14 March 2023 (2023-03-14) * paragraphs [0009] - [0032] * | 1-7, 11-13,15 | INV. G01P3/48 G01M13/02 G01M13/028 |
| X | SCHMIDT S. ET AL: "A tacholess order tracking methodology based on a probabilistic approach to incorporate angular acceleration information into the maxima tracking process", MECHANICAL SYSTEMS AND SIGNAL PROCESSING, vol. 100, 1 February 2018 (2018-02-01), pages 630-646, XP055965259, AMSTERDAM, NL ISSN: 0888-3270, DOI: 10.1016/j.ymssp.2017.07.053 * sections 2 and 3.2 * | 1-15 | |
| X | SHI HAIYANG ET AL: "An Improved Viterbi Algorithm for Adaptive Instantaneous Angular Speed Estimation and Its Application Into the Machine Fault Diagnosis", IEEE TRANSACTIONS ON INSTRUMENTATION AND MEASUREMENT, IEEE, USA, vol. 70, 27 October 2021 (2021-10-27), pages 1-11, XP011888863, ISSN: 0018-9456, DOI: 10.1109/TIM.2021.3123442 [retrieved on 2021-11-17] * abstract; figures 1-15 * | 1,11,15 | **TECHNICAL FIELDS SEARCHED (IPC)** G01P G01M |

-/--

The present search report has been drawn up for all claims

| Place of search | Date of completion of the search | Examiner |
|---|---|---|
| Munich | 5 March 2025 | Schwarz, Cornelia |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ...........................................................................

& : member of the same patent family, corresponding
    document

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 20 6820

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WANG YI ET AL: "An online tacholess order tracking technique based on generalized demodulation for rolling bearing fault detection", JOURNAL OF SOUND AND VIBRATION, ELSEVIER, AMSTERDAM , NL, vol. 367, 12 January 2016 (2016-01-12), pages 233-249, XP029401970, ISSN: 0022-460X, DOI: 10.1016/J.JSV.2015.12.041 * the whole document * | 1-15 | |

----

|  | | | TECHNICAL FIELDS SEARCHED (IPC) |
|---|---|---|---|

The present search report has been drawn up for all claims

| Place of search | Date of completion of the search | Examiner |
|---|---|---|
| Munich | 5 March 2025 | Schwarz, Cornelia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 6820

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2025

| Patent document cited in search report | Publication date | Patent family member(s) | Publication date |
|---|---|---|---|
| CN 115791155 A | 14-03-2023 | NONE | |

For more details about this annex : see Official Journal of the European Patent Office, No. 12/82

EPO FORM P0459